(19) **Europäisches Patentamt**

**European Patent Office**

**Office européen des brevets**

(11) **EP 0 772 160 B1**

(12) **EUROPEAN PATENT SPECIFICATION**

(45) Date of publication and mention
of the grant of the patent:
**07.03.2001 Bulletin 2001/10**

(51) Int Cl.[7]: **G06T 17/20**, G06T 17/00,
G06T 15/00

(21) Application number: **95120746.3**

(22) Date of filing: **29.12.1995**

(54) **Data processing method for displaying a three dimensional surface**

Datenverarbeitungsverfahren zur Darstellung einer dreidimensionalen Oberfläche

Méthode de traitement de données pour l'affichage d'une surface tri-dimensionnelle

(84) Designated Contracting States:
**DE FR GB**

(30) Priority: **27.10.1995 JP 28050695**

(43) Date of publication of application:
**07.05.1997 Bulletin 1997/19**

(73) Proprietor: **Ultra-high Speed Network and
Computer Technology Laboratories
Minato-ku, Tokyo (JP)**

(72) Inventor: **Nagasawa, Mikio
2-6, Toranomon 5-chome, Minato-ku, Tokyo (JP)**

(74) Representative:
**von Samson-Himmelstjerna, Friedrich R.,
Dipl.-Phys. et al
SAMSON & PARTNER
Widenmayerstrasse 5
80538 München (DE)**

(56) References cited:
- **MEDICAL PHYSICS, vol. 19, no. 2, March 1992, NEW YORK US, pages 419-431, XP000291138 LANCASTER E.A.: "A GEOMETRIC MODEL FOR MEASUREMENT OF SURFACE DISTANCE, SURFACE AREA, AND VOLUME FROM TOMOGRAPHIC IMAGES"**
- **PROCEEDINGS OF IEEE CONFERENCE ON VISUALIZATION 1992, pp. 54-61, J.J. van Wijk: "Rendering Surface-Particles", October 1992**
- **IEEE COMPUTER GRAPHICS AND APPLICATIONS, Vol. 8, Issue 3, pp. 29-37, M. Levoy: "Display of Surfaces from Volume Data", May 1988**

**Description**

Background of the Invention

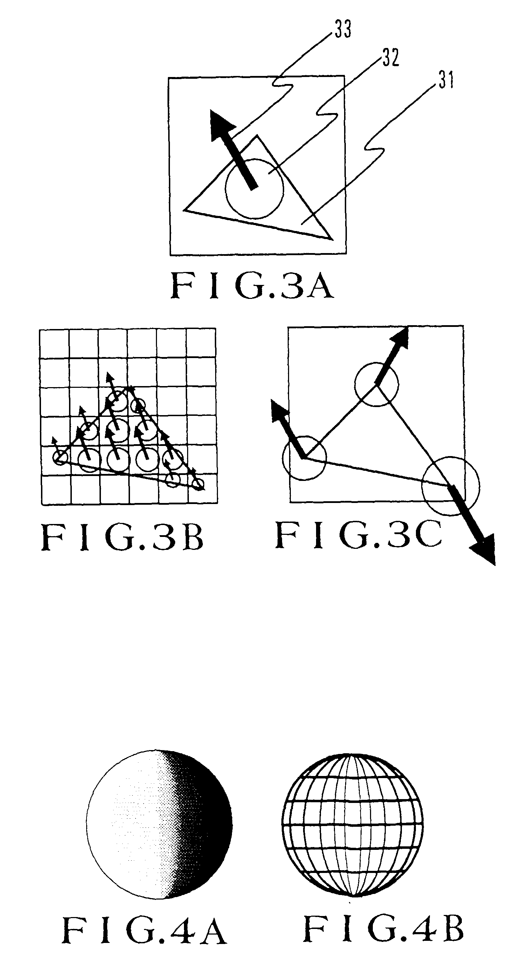

The present invention relates to a data processing method in displaying a 3-D surface on a computer display.
As a 3-D surface display method for representing solid figures on a 2-D display, a display method (e.g., a parametric curved surface method) using functional data and a display method using polygons are available.
To represent, e.g., a sphere using the functional data of the former method is to represent a spherical surface using a parametric curved surface, as shown in FIG. 4A.
According to a representation using polygons of the latter method, a curved surface is represented by a large number of polygons, as shown in Fig. 4B. This method is the most direct and easy method. The display method using polygons is most popular at present.
The state shown in Fig. 4B is the state of data. In the polygonal representation, rendering is performed using data represented by a wire frame constituted by straight lines to obtain a solid representation having a sense of reality. In the polygonal representation, polygon data imparted with a connection relationship between straight edges and space coordinates of vertices of a solid figure are displayed.
The following problem is posed in conventional data processing for the 3-D surface display described above.
For example, in a polygonal solid representation, to display a polygon mapped on the pixels of an image, calculations for mapping the straight edges of a solid figure onto pixels and smoothing are required as preprocessing operations.
To calculate the light scattering effect as rendering, multistage processing is required such that directivity of each polygonal surface, i.e., a normal vector must be calculated as internal processing, and polygon data located nearest to the observing position must be displayed by a Z buffer method or hidden surface processing.
Complicated multistage data processing is required in the polygonal solid representation, as described above. Therefore, a solid display cannot be performed at high speed.
When image data in a conventional polygon display is to be set in ATM (Asynchronous Transfer Mode) cells in order to transmit it at high speed, transmission processing is complicated, and high-speed transmission is impaired.
To set the image data of the polygon display in ATM cells, the data to be transmitted must be divided in accordance with the size of the an ATM cell because the ATM cell has a fixed data length. In this manner, transmission processing is complicated, and high-speed transmission is impaired.
The connection information in the polygon display generally indicates only an order for connecting the vertices of a polygon and does not guarantee a unique flat surface.
A polygon corresponding to an isoplethic surface and having a large grating point pitch and a large spatial change in sampling value has a polygonal surface not as a flat surface but as a twisted surface if the polygon is a figure having four or more vertices. For this reason, data processing is erroneously performed depending on a hidden line processing in a 3-D surface display, often resulting in an erroneous image.
The document J. J. van Wijk: "Rendering surface-particles" of PROCEEDINGS OF IEEE CONFERENCE ON A VISUALIZATION 1992, OCTOBER 1992, pp. 54-61, describes a method for visualizing 3-D flow fields. Thereby, surface-particles having a predetermined surface area are released at certain points within the flow field and generate a texture surface, which moves according to the flow. In other words, the surface-particles travel and rotate according to the flow. Thereby, the rotation is described by a normal vector normal to the surface area of the surface-particle. In order to provide for an exact representation of the surface-particles the latter one are considered as small Gaussian clouds that distort under influence of the flow field. In other words, the shape of the particle may change according to the flow. However, the document does not show to divide a given three-dimensional surface to be displayed into a large number of unit surfaces (for example polygons), which are subsequently replaced by these surface-particles having the same surface area and orientation. Therefore, this document gives no hint at all on how to display an already given three-dimensional surface.

Summary of the Invention

It is, therefore, an object of the present invention to provide a data processing method capable of performing data processing at a higher speed with a higher accuracy than those of the conventional method.
In order to achieve the above object, according to the present invention, there is provided a data processing method comprising the steps of dividing a three-dimensional surface to be displayed into a large number of unit surfaces, describing a coordinate position of each unit surface by vector information constituted by a normal vector which has a vector direction indicating a normal direction of each unit surface and an absolute value of a vector indicating a surface area of each unit surface, and combining the normal vectors to obtain data for representing the three-dimensional surface. In other words, according to the basic principle of the present invention, a normal vector which indicates the normal direction of a unit surface obtained by dividing a surface to be displayed, and has the absolute value of the unit surface as a vector length is used as data for representing the surface. For this reason, normal vector data are independent of each other and need not indicate a relationship between adjacent data. In addition, data indicating the angle of the normal vector in the normal direction is subjected to discrete processing, so that this data can serve as data for representing the surface. For this reason, the data indicating the angle of the normal vector may be compressed. According to the invention, the surface is then displayed by replacing each unit surface by a disk, the center of which is given by coordinates of the normal vector of the corresponding replaced unit surface, the area of which is given by the vector length, and the normal of which is given by the vector direction.

More specifically, as a result of data processing, the surface to be displayed is represented by overlapping semi-transparent disks, but is not set in an always adjacent state.

Brief Description of the Drawings

Figs. 1A and 1B are views for explaining the state of data in a data processing method of the present invention;
Fig. 2A to 2D are views for explaining states in which a 3-D surface is displayed;
Figs. 3A to 3C are views for explaining a method of obtaining an area normal vector; and
Figs. 4A and 4B are views for explaining the states of a conventional 3-D surface display.

Description of the Preferred Embodiment

The present invention will be generally described.

In the present invention, the state of a normal direction to a polygon in a polygonal representation and the area of this polygon are used as data for representing a surface.

As shown in Fig. 1A, data is constituted by a line (vector) indicating the direction of a polygonal surface, and the length of this line indicates the area of the polygon. This normal vector will be referred to as an area normal vector hereinafter.

The area normal vector has coordinates (x,y,z), azimuths $\theta$ and $\phi$ indicating the direction of the vector, and a length A indicating the area.

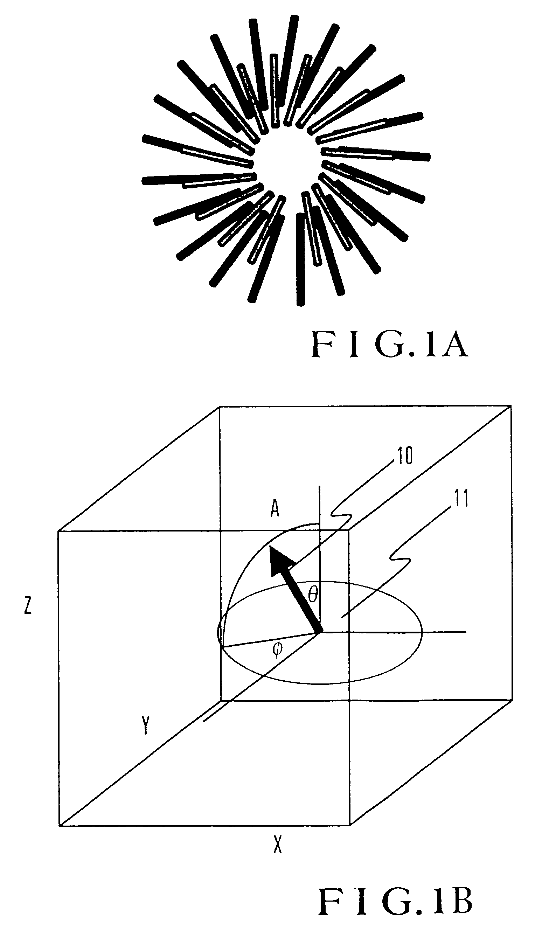

To represent a surface using these data, as shown in Fig. 1B, a semi-transparent circle (disk) 11 having coordinates X(x,y,z) of an area normal vector 10 as its center, an area A, and the azimuths $\theta$ and $\phi$ indicating the direction of the area normal vector 10 is generated and displayed.

An embodiment of the present invention will be described below wherein a 3-D surface is particularly displayed.

<Form of Data>

If a surface is given as polygon data (wire frame), the given surface is divided into triangles again, and the outer product vector of each triangle is calculated. The outer product vector itself serves as the area normal vector. The absolute value (length A) of the area normal vector becomes twice the area of the original triangle, and the direction (azimuths $\theta$ and $\phi$) of the area normal vector is perpendicular to the surface (polygonal surface).

The calculated values are rounded as integers and converted into a data form having a fixed amount, thereby compressing the data. Input data (area normal vector data) in a display scheme shown in Table 1 are obtained. Note that only some data are listed in Table 1.

Using the resultant area normal vector, a disk having the principal scattering direction as the normal direction, the light scattering sectional area as the area indicated by the length A, and a density decreased from the center is generated to represent a surface.

Table 1

|  | x | y | z | $\theta$ | $\phi$ | A |
|---|---|---|---|---|---|---|
| Data 1 | 468 | 594 | 626 | 0 | 6 | 16 |
| Data 2 | 531 | 578 | 625 | 0 | 6 | 73 |
| Data 3 | 618 | 511 | 535 | 0 | 6 | 209 |
| Data 4 | 531 | 589 | 625 | 0 | 6 | 115 |
| Data 5 | 616 | 524 | 535 | 0 | 6 | 146 |

Table 1   (continued)

|  | x | y | z | θ | φ | A |
|---|---|---|---|---|---|---|
| Data 6 | 468 | 578 | 625 | 0 | 6 | 73 |
| Data 7 | 469 | 587 | 625 | 0 | 6 | 75 |
| Data 8 | 381 | 511 | 535 | 0 | 6 | 209 |
| Data 9 | 480 | 432 | 641 | 0 | 6 | 89 |
| . | . | . | . | . | . | . |
| . | . | . | . | . | . | . |
| Data 1748 | 509 | 637 | 328 | 30 | 45 | 1557 |
| Data 1749 | 543 | 511 | 347 | 30 | 47 | 1088 |
| Data 1750 | 559 | 495 | 350 | 29 | 48 | 1357 |
| Data 1751 | 537 | 323 | 318 | 30 | 50 | 1408 |
| Data 1752 | 509 | 505 | 344 | 30 | 52 | 861 |
| Data 1753 | 554 | 654 | 329 | 30 | 55 | 1008 |
| Data 1754 | 596 | 336 | 326 | 30 | 60 | 1555 |

The data shown in Table 1 include values up to $1024 = 2^{10}$ for x, y, and z, $32 = 2^5$ for θ, $2^6$ for φ, and $2^{15}$ for A. More specifically, one area normal vector has a 7-byte (56 bits = 10 + 10 + 10 + 5 + 6 + 15) data length.

As compared with the polygonal representation, the data volume for the surface display can be reduced.

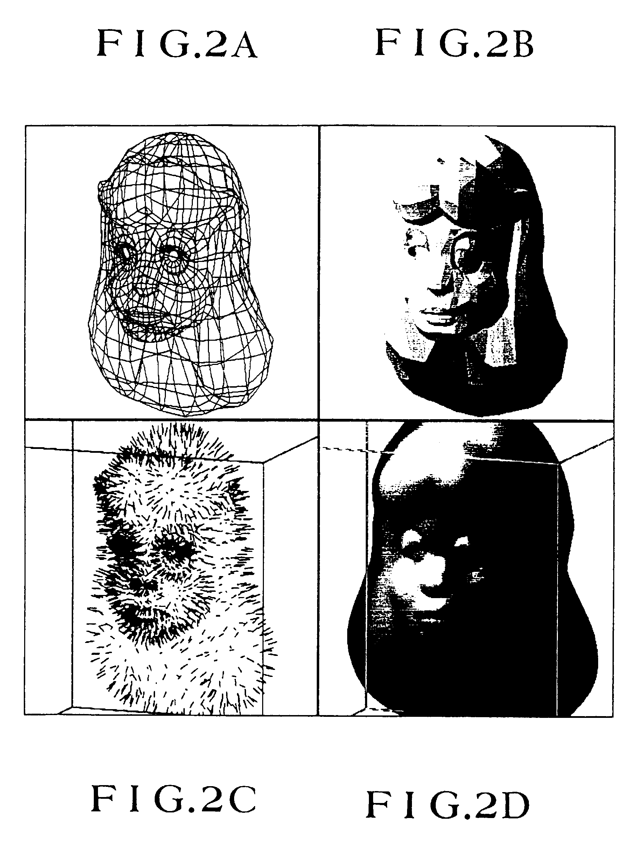

In this data length arrangement, a good image quality is obtained when the data is output to a screen having a resolution of about 1,000 x 1,000 pixels, as shown in Fig. 2D. Figs. 2A to 2D will be described in detail later on.

<Surface Display>

A surface display will be described below. Light scattering on the generated disk is calculated to obtain a 3-D representation image as a raster image which is not a line image.

As described above, according to this embodiment, edge information of a polygon need not be used, and 2-D image data is directly obtained from 3-D area normal vector data having the length corresponding to the area of a polygon and the directivity perpendicular to the polygon.

That is, the calculations for a necessary area normal vector $A(X_k)$ are started with use of the outer product of each triangle.

An image generation method is equivalent to a simulation calculation in which light components passing through K 3-D semi-transparent disks distributed on the 3-D space coordinates $(x_k, y_k, z_k)$ of the vector $X_k$ having the direction of line of sight as z-axis reaches 2-D coordinates $(u_i, v_i)$ of i pixels $U_i$ on the screen.

First, the illuminance and the transparency of the background is assumed by equations (1) below:

$$c_\lambda(X_0) = 0, \; \alpha(X_0) = 1 \tag{1}$$

The intensity of each transmitted light component is obtained by equation (2) below. This calculation indicates the integration of K area normal vectors in the direction of line of sight with a scattered light radiation transparency weight defined by equation (3) below:

$$C_\lambda(u_i) = \sum_{k=0}^{K} \left[ c_\lambda(x_k) \, \alpha(u_i, x_k) \prod_{m=k+1}^{K} (1 - \alpha(u_i, x_k)) \right] \quad \cdots (2)$$

$$c_\lambda(x_k) = [k_{amb,\lambda} + k_{dif,\lambda} \, (N(x_k) \cdot L) + k_{spe,\lambda} \, (N(x_k) \cdot H)^n] \tag{3}$$

In equation (3), a specular reflection direction vector H is defined by equation (4), and the normal unit vector $N(X_k)$ is defined by equation (5) below:

$$H = \frac{V + L}{|V + L|} \tag{4}$$

$$N(x_k) = \frac{A(x_k)}{|A(x_k)|} \tag{5}$$

The opacity represented by $\alpha(U_i, U_k)$ in equation (2) is physically obtained by multiple integration of radiation transfer in a medium imparted with a light absorption coefficient. However, in this case, the opacity is linearly integrated and approximated in units of area normal vectors. An opacity filter is given as a parameter as follows:

$$\alpha(u_i, x_k) = \frac{1}{(\pi A_k)^{3/2}} \exp(-|u_i - x_k|^2 / |A_k|) \tag{6}$$

The size of the semi-transparent disk is determined by the length of the given area normal vector $A(X_k)$.

The disk-like opacity distribution of the semi-transparent disk is obtained by equation (6), and the contribution of the scatted light which is characterized by the area normal vector is calculated using equation (3), thereby representing the density distribution of the space.

According to this embodiment, to represent (display) the surface of a figure by data processing, "hidden surface processing" is not performed, but a surface is recognized in accordance with the degree of opacity in such a manner that the surface of, e.g., a mass of glass is judged.

In equation (3) indicating the degree of contribution of this scattered light, scattered light is calculated in accordance with the relationship between the direction vector L of external light, the direction determined by the vector $V = (0,0,1)$ of the line of slight of the observer, and the input area normal vector $A(X_k)$.

The input optical parameters in equation (3) have the following characteristics.

When the reflection coefficient $k_{amb}$ of the ambient light is increased, a target display image becomes bright.

When the reflection coefficient $k_{dif}$ of the scattered light is increased, the surface shade becomes manifest.

The coefficient $k_{spe}$ of specular reflection and the power index n are increased, a sharp highlighting effect can be obtained.

Figs. 2A to 2D explain a conventional polygonal representation and a surface representation according to this embodiment.

Fig. 2A shows states of data in polygonal surface representation, and Fig. 2B shows the representation using polygons based on Fig. 2A.

Fig. 2C shows states of the area normal vector data according to the present invention, and Fig. 2D shows a surface representation based on Fig. 2C.

As shown in Fig. 2A, the density of the original data at the top of the hair is low.

When the data is rendered by the conventional polygonal representation, the top of the hair having a low data density is displayed in a flat plain state as in the remaining portion.

To the contrary, from the state shown in Fig. 2A, area normal vector data shown in Fig. 2C are obtained. Using these vector data, if a surface is represented by a set of semi-transparent disks, the high- and low-density portions of the original data are properly reflected on the image quality.

While a ray tracing method calculates reflection and refraction on a polygonal surface, the present invention approximates scattering and absorption of light in the continuous distribution of the semi-transparent disks on the basis of the radiation transfer given by equation (3).

As described above, data deformations caused by a threshold, such as appearance of artificial straight edges in the polygonal representation, can be minimized. The natural representation of surface (3-D) data can be determined.

Data having a low spatial resolution can be obtained as a blur image as it is.

When this method is applied to isosurface data of a 3-D fluid, unnecessary polygonal contours do not appear, and the flow image of the fluid can be properly displayed. This method is also suitable for representing surface motions of a cloud or smoke.

Equation (6) may be adjusted to perform a 3-D surface display using semi-transparent disks having a surface as an arbitrary transparency distribution.

As for a color display, the dependence of each color wavelength $\lambda$ is imparted to equation (3) for calculating scattered light, and an integration calculation given by equation (2) is performed for each color component, thereby representing a color image.

It is also possible to color-display physical values belonging to the 3-D spatial coordinates $(x_k, y_k, z_k)$ of the vector $X_k$ by means of area normal vectors.

As an additional attribute, 2-D image information can be combined with area normal vectors to realize texture mapping.

In calculating an area normal vector from polygon data, a polygon having a high aspect ratio or adjacent polygon size values are largely different, interpolation from the resultant disks of area normal vectors in equation (6) becomes difficult, as shown in Fig. 3A. When an area normal vector 33 obtained from a polygon 31 is used, the resultant state is largely different from that of the original polygon data, as indicated by a disk 32, thereby degrading the surface quality.

In this case, as shown in Fig. 3B, the grating is divided again to obtain area normal vectors. Alternatively, as shown in Fig. 3C, adjacent polygons are averaged at vertex positions.

<Data Compression>

To perform shading in a surface display, the angle of the area normal vector is enough to have a precision of about 6°. For this reason, in representing the direction of the area normal vector using the azimuths $\theta$ and $\phi$ on the polar coordinate system, the direction of the area normal vector can be quantized in 32 (= 5 bits) levels and 64 (= 6 bits) levels.

Upon this quantization, the data representing the direction can be compressed from floating-point data of 64 bits (= 32 + 32) to data of 11 bits (= 5 + 6).

In the conventional polygonal representation, since the direction of a polygon is represented by the vector V = $(v_x, v_y, v_z)$ on Cartesian coordinates, the above compression which can control redundancy of the angular components cannot be performed.

According to the present invention, since the data are compressed, data processing such as a surface display and transfer can be performed at high speed.

As described above, according to the present invention, the data transfer rate can be increased, and a high-quality surface display can be performed at a higher speed. In addition, data can be transferred in fixed-length data communication such as ATM communication with a higher efficiency.

For example, the data length of one cell in ATM transfer is determined to be 48 bytes.

When the record form shown in Table 1 is used, one area normal vector is given as 56 bits (= 7 bytes), and 1-byte data is added thereto to obtain 8-byte data. Therefore, six area normal vectors can be transferred through one ATM cell.

In the conventional polygon display, since the data does not have a fixed length, processing for transferring this data in ATM cells is not simple, and efficiency is degraded.

Assume that an ATM cell loss occurs due to the degradation of network quality. In the conventional polygon display, pieces of connection information of all the polygon data must be individually transmitted. If some data are missed, no polygon may be displayed.

To the contrary, according to the present invention, data missing is determined in units of six area normal vectors in an ATM all.

According to the present invention, even if several area normal vectors are missed, a surface display is rarely adversely affected as a whole. A display is not disabled even if several area normal vectors are missed.

In the above embodiment, a polygon, i.e., a triangle is used as a unit surface. However, a polygon may have four or more vertices. However, note that a polygon having four or more angles can be finally divided into triangles.

The unit surface may be a figure surrounded by a curve, but the unit surfaces need not be identical to each other.

In the above embodiment, the transparency becomes high toward the peripheral portion of the semi-transparent disk, as indicated by equation (6). The present invention is not limited to this. A change in transparency may be linear. Alternatively, a semi-transparent disk having a uniform transparency level in its entire area may be used. However, when the transparency becomes high toward the peripheral portion, a high-quality surface display can be performed.

As described above, according to the present invention, the absolute value of the surface area of a unit area obtained by dividing a 3-D surface to be displayed is given as a vector length. For this reason, the data volume can be reduced, and higher-speed data processing can be performed.

When data indicating the angle of the direction of a normal vector is subjected to discrete processing to represent a surface, the data is compressed. The data volume can be further reduced, and higher-speed data processing can be performed. For example, data for displaying a 3-D surface can be transferred at a higher speed than that of the conventional case. The 3-D surface data can be processed at a higher speed than the conventional case.

According to the present invention, a 3-D surface display is performed using a disk (e.g., a semi-transparent disk) having the area normal vector position as its center, the vector length as its area, and the normal direction as its normal. For this reason, according to the data processing, a surface to be displayed can be represented to reflect the detail of the original data. The image quality at the contour in displaying a 3-D surface can be improved without performing multistage anitialiasing processing.

No component absent in the original data is displayed, and an erroneous display can be reduced.

**Claims**

1. A data processing method for displaying a three-dimensional surface comprising the steps of:

    dividing a three-dimensional surface to be displayed into a large number of unit surfaces;
    for each unit surface, describing a coordinate position of the unit surface with a coordinate position of a normal vector (10), a normal direction of the unit surface with a vector direction of the normal vector and an absolute value of a surface area of the unit surface with a vector length of the normal vector;
    combining the normal vectors to obtain data for representing the three-dimensional surface; and
    displaying the three-dimensional surface by replacing each unit surface by a disk (11), whereby each disk (11) has coordinates obtained by the normal vector (10) of the corresponding replaced unit surface contained in the data, whereby the coordinate position of said normal vector is assigned to the center of the disk, the vector length of said normal vector is assigned to the area of the disk, and the vector direction of said normal vector is assigned to the normal of the disk.

2. A method according to claim 1, wherein the disk is semi-transparent and has a higher transparency toward a peripheral portion thereof.

3. A method according to claim 1 or claim 2, further comprising the step of displaying the three-dimensional surface by performing discrete processing of data indicating an angle of the normal direction of each vector contained in the data.

4. A method according to anyone of claims 1 to 3, wherein the unit surface is triangular.

**Patentansprüche**

1. Datenverarbeitungsverfahren zum Anzeigen einer dreidimensionalen Oberfläche, welches die folgenden Schritte umfaßt:

    Unterteilen einer anzuzeigenden dreidimensionalen Oberfläche in eine große Anzahl an Einheitsflächen;
    für jede Einheitsfläche, Beschreiben einer Koordinatenposition der Einheitsfläche mit einer Koordinatenposition eines Normalenvektors (10), einer Normalenrichtung der Einheitsfläche mit einer Vektorrichtung des Normalenvektors und eines Absolutwertes eines Flächeninhalts der Einheitsfläche mit einer Vektorlänge des Normalenvektors;

    Kombinieren der Normalenvektoren, um Daten zum Darstellen der dreidimensionalen Oberfläche zu erhalten;
    Anzeigen der dreidimensionalen Oberfläche durch Ersetzen jeder Einheitsfläche durch eine Scheibe (11), wobei jede Scheibe (11) Koordinaten hat, welche über den Normalenvektor (10) der jeweiligen ersetzten Einheitsfläche erhalten werden, die in den Daten enthalten sind, wobei die Koordinatenposition des Normalenvektors dem Zentrum der Scheibe zugeordnet wird, die Vektorlänge des Normalenvektors der Fläche der Scheibe zugeordnet wird und die Vektorrichtung des Normalenvektors der Normalen der Scheibe zugeordnet wird.

2. Verfahren nach Anspruch 1, bei welchem die Scheibe semi-transparent ist und eine stärkere Transparenz in Richtung ihres Außenabschnittes aufweist.

3. Verfahren nach Anspruch 1 oder Anspruch 2, welches ferner die folgenden Schritte umfaßt: Anzeigen der dreidimensionalen Oberfläche durch Durchführen einer diskreten Verarbeitung von Daten, welche einen Winkel der Normalenrichtung jedes in den Daten enthaltenen Vektors angeben.

4. Verfahren nach einem der Ansprüche 1 bis 3, bei welchem die Einheitsfläche dreieckig ist.

**Revendications**

1. Procédé de traitement de données pour afficher une surface tridimensionnelle comprenant les étapes consistant à :

   diviser une surface tridimensionnelle à afficher en un grand nombre de surfaces unitaires ;
   pour chaque surface unitaire, décrire une position de coordonnées de la surface unitaire au moyen d'une position de coordonnées d'un vecteur normal (10), une direction normale de la surface unitaire avec une direction de vecteur du vecteur normal et une valeur absolue d'une aire de surface de la surface unitaire au moyen d'une longueur de vecteur du vecteur normal ;
   combiner les vecteurs normaux pour obtenir des données destinées à représenter la surface tridimensionnelle ; et
   afficher la surface tridimensionnelle en remplaçant chaque surface unitaire par un disque (11), où chaque disque (11) a pour coordonnées celles obtenues au moyen du vecteur normal (10) de la surface unitaire remplacée correspondante contenue dans les données, où la position de coordonnées dudit vecteur normal est attribuée au centre du disque, la longueur de vecteur dudit vecteur normal est attribuée à l'aire du disque, et la direction de vecteur dudit vecteur normal est attribuée à la normale du disque.

2. Procédé selon la revendication 1, dans lequel le disque est semi-transparent et a une transparence supérieure dans la direction d'une partie périphérique du disque.

3. Procédé selon la revendication 1 ou la revendication 2, comprenant en outre l'étape consistant à afficher la surface tridimensionnelle en effectuant un traitement discret des données indiquant un angle de la direction normale de chaque vecteur contenu dans les données.

4. Procédé selon l'une quelconque des revendications 1 à 3, dans lequel la surface unitaire est triangulaire.

# FIG.1A

# FIG.1B

FIG.2A    FIG.2B

FIG.2C    FIG.2D

F I G.3A

F I G.3B

F I G.3C

F I G.4A

F I G.4B